# EUROPEAN PATENT APPLICATION

(11) **EP 4 343 458 A1**
(43) Date of publication of application: **27.03.2024**
(21) Application number: 22196795.3
(22) Date of filing: 21.09.2022
(51) Int. Cl.: G05B 17/02, G05B 19/418

(54) **METHOD FOR MONITORING QUALITY OF AN INDUSTRIAL PROCESS**

(71) Applicant: Siemens Aktiengesellschaft, 80333 München (DE)
(72) Inventor: Krüger, Daniel, 91154 Roth (DE); Reznik, Daniel, 13503 Berlin (DE)
(74) Representative: Siemens Patent Attorneys

(57) **Abstract**

The current disclosure describes a method for monitoring a quality associated with an industrial process. The method comprises providing a simulation model of the industrial process, generating a plurality of dataset associated with the plurality of output parameters by simulating the simulation model of the industrial process using test data, selecting a first set of acceptable datasets from the plurality of datasets associated with the plurality of output parameters using one or more predefined quality criteria, and determining at least one of an upper specification limit and a lower specification limit for at least one output parameter from the selected first set of acceptable datasets. The test data includes a second plurality of data sets associated with the input parameters, associated with various probability distributions of the input parameters.

## Description

### Background:

The current disclosure relates to process control and automation, and more particularly, determination of process specifications limits used in quality monitoring. The quality monitoring of manufacturing processes is often based on the analysis of process state variables, which are recorded as a time series signal with the help of suitable sensors (e.g. spindle torque of a milling machine, surface temperature of an additively manufactured component). In order to be able to make a statement about the quality of the process result, the measured signal is compared with an upper (USL) and lower (LSL) specification limit.

### Description:

The current disclosure relates to monitoring of processes and particularly, in relation to determination of upper and lower specification limits. Conventionally, quality of processes in determined based on the analysis of process state variables, which are compared against an upper (USL) and lower (LSL) specification limits, to determine quality of the process. The range between LSL and USL is often called process band. If the measured process variable value is within the process band, the process result is considered good.

However, it should be noted that LSL and USL are generally not constants and can vary against time. Therefore, a meaningful definition of these limits is not intuitively possible in practice and generally requires a deep understanding of the respective manufacturing process, which is not always the case for the user, especially in the field of additive manufacturing.

In one approach, historic data sets of process runs are collected and then classified as good or bad. Then, using the classified process data, the upper and lower specification limits are calculated using statistical techniques such as six sigma, etc. This approach requires significant classified process data to calculate the specification limits. Accordingly, there is a need for a method and device which addresses the issues mentioned above.

Accordingly, the current disclosure describes a method for monitoring a quality associated with an industrial process. The method comprises providing a simulation model of the industrial process, generating a plurality of datasets associated with the plurality of output parameters by simulating the simulation model of the industrial process using test data associated with plurality of input parameters, selecting a first set of acceptable datasets from the plurality of datasets associated with the plurality of output parameters using one or more predefined quality criteria, and determining at least one of an upper specification limit and a lower specification limit for at least one output parameter from the selected first set of acceptable datasets. The simulation model is for mapping a plurality of input parameters associated with the industrial process, to a plurality of output parameters associated with the industrial process. The test data includes a plurality of data sets associated with the input parameters. Each data set from the test data is associated with a corresponding probability distribution of the input parameters.

Accordingly, the current disclosure describes a method where the process specification limits are generated based on simulated data generated using a simulation model. In order to ensure that generated process specification limits are indicative of the process parameters, the input data utilized to generate the simulated data, covers a plurality of probability distribution. Accordingly, the process specifications limits are calculated without significant historic process data.

In an embodiment, the upper specification limit and the lower specification limit are utilized for monitoring the quality of the industrial process by comparing real time values associated with the at least one output parameter against the upper specification limit and the lower specification limit. Accordingly, the calculated parameters are utilized in quality monitoring and process control.

In an embodiment, the method further comprises calibrating the stimulation model. Calibrating the simulation model comprises correcting a mean value associated with the simulation model based on process data associated with the industrial process, the process data comprising time series data associated with the plurality of input and output parameters. Accordingly, the method is able to compensate for the variations in process parameters by adjusting the mean value to calibrate the specification limits to the variations in the process parameters.

In an example, one of an upper specification limit and lower specification limit are determined utilizing a statistical technique in relation to the first set of acceptable datasets. For example, the upper and lower specification limits are determined using six sigma technique. In an embodiment, the industrial process is an additive manufacturing process and the one or more input parameters are associated with laser power output associated with a laser, powder characteristics, machine tuning, trajectory of the laser and the one or more output parameters are associated with workpiece geometry, melt pool size, manufacturing temperature. In another embodiment, the industrial process is a subtractive machining process and the one or more input parameters are associated with dimensions of a blank material used in the industrial process, placement of the blank material in a machine associated with the industrial process, characteristics of the blank material, geometry of a cutting tool used in the machine and the one or more output parameters are associated with surface quality of a workpiece, geometry of the workpiece. In yet another embodiment, the industrial process is a sheet metal forming process, and the one or more input parameters are associated with characteristics of the raw material, friction coefficients between a tool and the raw material, geometry of a mold, and the one or more output parameters are associated with stamping force generated by the tool, geometry of a work piece.

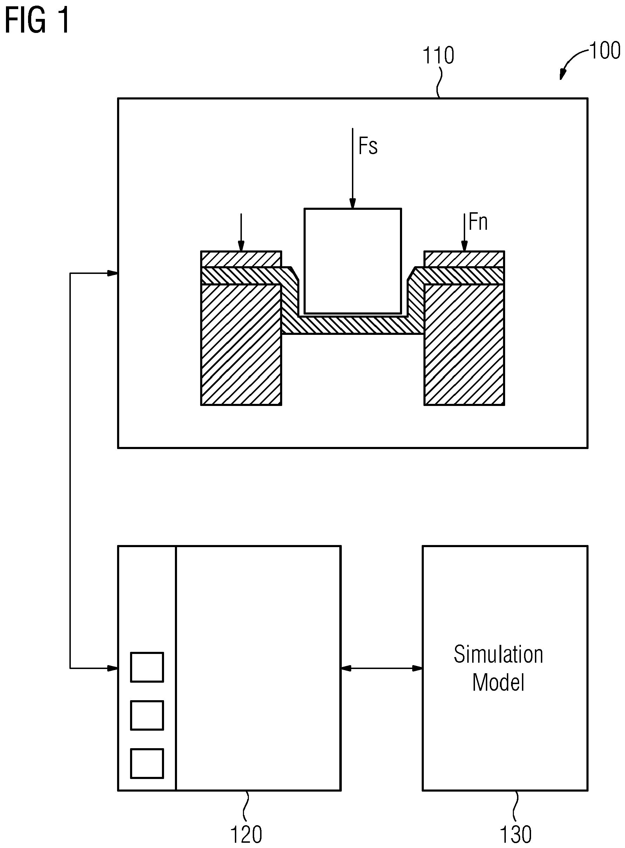

In another aspect, the current disclosure describes a device for monitoring a quality associated with an industrial process. The device comprises one or more processors connected to a memory module. The one or more processors are configured to generate a plurality of datasets associated with the plurality of output parameters by simulating a simulation model of the industrial process using test data, wherein the test data includes a plurality of data sets associated with the input parameters, each data set from the test data associated of a corresponding probability distribution of the input parameters and wherein the simulation model is for mapping a plurality of input parameters associated with the industrial process, to a plurality of output parameters associated with the industrial process; select a first set of acceptable datasets from the plurality of datasets associated with the plurality of output parameters using one or more predefined quality criteria; and determine at least one of an upper specification limit and a lower specification limit for at least one output parameter from the selected first set of acceptable datasets. In yet another aspect, the current disclosure describes a non transitory storage medium comprising a plurality of instructions, which when executed on one or more processors, cause the one or more processors to generate a plurality of datasets associated with the plurality of output parameters by simulating a simulation model of the industrial process using test data, wherein the test data includes a plurality of data sets associated with the input parameters, each data set from the test data associated of a corresponding probability distribution of the input parameters and wherein the simulation model is for mapping a plurality of input parameters associated with the industrial process, to a plurality of output parameters associated with the industrial process; select a first set of acceptable datasets from the plurality of datasets associated with the plurality of output parameters using one or more predefined quality criteria; and determine at least one of an upper specification limit and a lower specification limit for at least one output parameter from the selected first set of acceptable datasets. The advantages of the method are applicable to the device and the storage medium. These aspects are further explained in reference to figures 1-3.
Figure 1 illustrates a section of an industrial facility comprising one or more machines for performing an industrial process.
Figure 2 illustrates a method for monitoring a quality associated with the industrial process; and
Figure 3 illustrates a computing device for monitoring a quality associated with the industrial process.

Figure 1 illustrates a section of an industrial facility comprising one or more machines for performing an industrial process 110 controlled by a controller 120. Industrial facility herein refers to any environment where one or more industrial processes such as sheet metal manufacturing, smelting, additive manufacturing, machining etc., may take place. Examples of industrial facility includes process plants, oil refineries, automobile factories, etc. The industrial automation system includes a plurality of industrial devices such as control devices, field devices, process machines, etc. The controllers (shown in figure as controller 120) are connected directly or via a plurality of peripheral or interface devices, to a plurality of field devices such as actuators and sensor devices for monitoring and controlling industrial processes in the industrial facility. These field devices can include flowmeters, value actuators, temperature sensors, pressure sensors, etc. Based on the process values, the controllers generate control commands for the actuators, for control and regulation of industrial processes in the industrial facility.

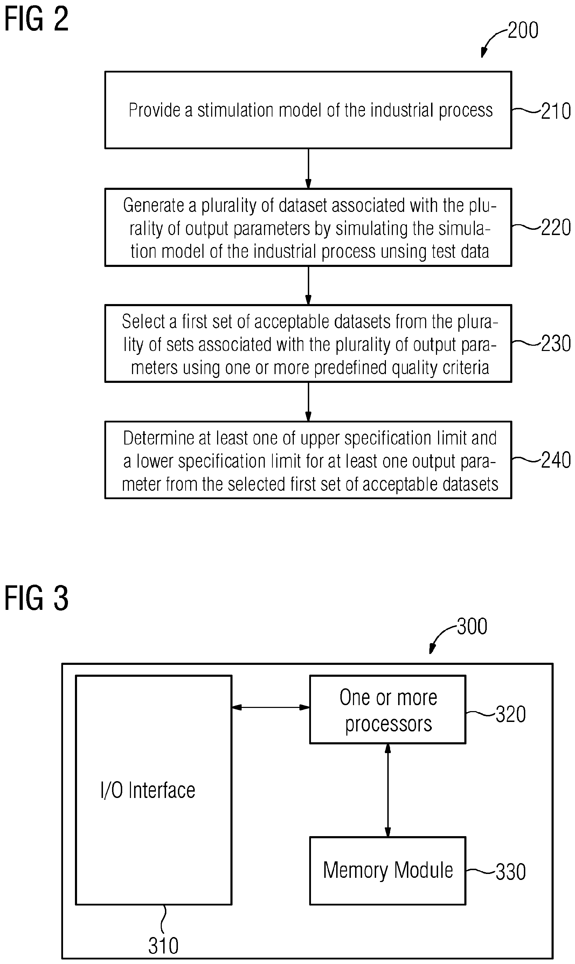

For example, the industrial process is a sheet metal forming process 110 as shown in figure 1, where blanks made from sheet metal is subjected to force (shown in figure as Fₛ) using forming machines to deform the sheet material to a desired shape, while the blank is held in place using clamping forces (shown in figure as Fₙ). The operation of the forming machines is controlled by the controller 120. Additionally, the controller 120 is connected to a simulation model 130 which is used by the controller 120 in the control of the sheet metal forming process 110. Particularly, the controller 120 utilizes the simulation model 130 in determination of the upper and lower specification limits, which are used by the controller 120 in monitoring the quality of the industrial process. The upper specification limit and the lower specification limit are utilized for monitoring the quality of the industrial process by the controller by comparing real time values associated with the at least one output parameter against the upper specification limit and the lower specification limit associated with the at least one output parameter. This is further explained in reference to figure 2.

Figure 2 illustrates a method 200 for monitoring a quality associated with an industrial process 110. The method 200 is realized by the controller 120. At step 210, the controller 120 is provided with a simulation model 130 of the industrial process 110. The simulation model 130 is for mapping a plurality of input parameters associated with the industrial process 110, to a plurality of output parameters associated with the industrial process. The simulation model 130 can be understood as a function that maps a vector from input parameters to a vector from output parameters. In an embodiment, the simulation model 130 is a stochastic simulation model which treats all input and output variables as statistically distributed, i.e. it maps input parameter distributions to output parameter distributions.

At step 220, the controller 120 generates a plurality of datasets associated with the plurality of output parameters by simulating the simulation model of the industrial process using test data. The test data includes a plurality of data sets associated with the input parameters. Each data set from the test data is associated of a corresponding probability distribution of the input parameters. Additionally, each data set from the test data includes a plurality of values corresponding to the plurality of input parameters.

Often, a scattering of the output parameters observed is due to corresponding scattering in the input variables. In the example above, the sheet thickness (an input parameter) is likely to be subject to slight fluctuations, leads to varying stamping forces (an output parameter). Accordingly, in order to get a wide range of output parameter values, a plurality of values of input parameters across various probability distribution are utilized by the simulation model 130 in generating the datasets associated with the plurality of output parameters.

Then, at step 230, the controller 120 selects a first set of acceptable datasets from the plurality of datasets associated with the plurality of output parameters using one or more predefined quality criteria. Subsequent to the generation of the datasets associated with the output parameters, the values of the output parameters in the datasets is compared against predefined thresholds to establish if the values correspond to normal operations or are anomalies. The values which are considered to be within the acceptable process output parameters, are selected in the first set of acceptable datasets.

Finally, at step 240, the controller 120 determines at least one of an upper specification limit and a lower specification limit for at least one output parameter from the selected first set of acceptable datasets. Based on the first set of acceptable datasets, for each output parameter in the dataset, the values of the corresponding output parameter are used to calculate at least one of the upper and lower specification limits for the corresponding output parameter. Such calculation is performed using statistical techniques known in the state of the art. For example, the values of an output parameter from the first set of acceptable datasets, is statistically evaluated. The mean value and standard deviation for each output parameter is calculated. Then, the specification limits are set based on corresponding percentile values (e.g. +/- 3 sigma). In another example, the lower specification limit (LSL) is set such that 1% of the samples are below this value, and upper specification limit (USL) is set such that 99% of the samples are below this value.

In an embodiment, the method 200 further comprises calibrating the stimulation model wherein calibrating the simulation model comprises correcting a mean value associated with the simulation model based on process data associated with the industrial process (i.e. data from the sensors). The upper and lower specification limits determined above reflect the expected acceptable dispersion of each process variable, i.e., they reliably describe the process bandwidth. However, in some circumstances these values do not correspond to sensor signals of the real process, as there may be systematic mean value shifts between simulated and measured quantities. Therefore, a calibration of the simulation model is carried out to account for the shift in the values. The calibration of the simulation model is performed by calculating a mean value from the shifted process values from the sensors and by correcting a mean value associated with the first dataset.

While the above method has be explained in relation to a general industrial process, the above method may be used for manufacturing processes such as sheet metal forming, subtractive machining, additive manufacturing, etc. For example, when the industrial process is a subtractive machining process such as milling, etc., the one or more input parameters are associated with dimensions of a blank material used in the industrial process, placement of the blank material in a machine associated with the industrial process, characteristics of the blank material, geometry of a cutting tool used in the machine, etc., may be used by the simulation model. Values relating to these parameters (i.e. test data) may be used by the simulation model to generate values of one or more output parameters are associated with surface quality of a workpiece, geometry of the workpiece, etc. (plurality of datasets associated with the plurality of output parameters).

Similarly, where the industrial process is a sheet metal forming process, and the one or more input parameters used by the simulation model may be associated with characteristics of the raw material, friction coefficients between a tool and the raw material, geometry of a mold, and the one or more output parameters (generated by the simulation model) are associated with stamping force generated by the tool, geometry of a work piece.

Similarly, the method 200 may be applied when the industrial process is an additive manufacturing process, where variance of the process input variables, can be modeled as pseudo-stochastic processes. For example, if the raw material is present as a powder, the stochastic nature of the powder results in local fluctuations that are difficult to map directly in the process simulation, since the calculation is numerically too complex taking into account the discrete nature of the powder. However, this can be avoided by calculating with a homogenized powder model, and a Gaussian-distributed proxy quantity such as the welding power or the thermal conductivity of the material is used for stochastic simulation. Additionally, Furthermore, the tool path also may be subject to certain fluctuations. When orienting the component in the machine coordinate system, small (often unintentional) rotations can shift reference points in such a way that a twotime tool path generation can result in locally different tool paths. In this respect, the tool path generation can also be regarded as a pseudo-stochastic process in the sense described above, and instead of considering a single tool path, a set of tool paths can also be used for a stochastic analysis. Additional input parameters may associated with laser power output associated with a laser, powder characteristics, machine tuning, trajectory of the laser and the one or more output parameters may be associated with workpiece geometry, melt pool size, manufacturing temperature.

While the above method 200 has been explained in reference to the controller 120, the method 200 may be realized by one or more device. Accordingly, the disclosure describes a computing device 300 as shown in figure 3 for realizing the current method. The computing device 300 include an I/O interface 310, one or more processors 320 and a memory module 330. The I/O interface 310 is configured to send and receive data from the various devices in the industrial facility. The memory module 330 includes a plurality of instructions which when executed by the one or more processors 320, cause the one or more processors 320 to generate a plurality of dataset associated with the plurality of output parameters by simulating a simulation model of the industrial process using test data, wherein the test data includes a second plurality of data sets associated with the input parameters, each data set from the second plurality of data sets associated of a corresponding probability distribution of the input parameters and wherein the simulation model is for mapping a plurality of input parameters associated with the industrial process, to a plurality of output parameters associated with the industrial process; select a first set of acceptable datasets from the plurality of datasets associated with the plurality of output parameters using one or more predefined quality criteria; and determine at least one of an upper specification limit and a lower specification limit for at least one output parameter from the selected first set of acceptable datasets.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non-transitory storage medium claims.

## Claims

1. A method (200) for monitoring a quality associated with an industrial process (110), the method (200) comprising:
a. Providing (210) a simulation model (130) of the industrial process (110), wherein the simulation model (130) is for mapping a plurality of input parameters associated with the industrial process (110), to a plurality of output parameters associated with the industrial process (110);
b. generating (220) a plurality of datasets associated with the plurality of output parameters by simulating the simulation model (130) of the industrial process (110) using test data, wherein the test data includes a plurality of data sets associated with the input parameters, each data set from the test data associated of a corresponding probability distribution of the input parameters;
c. selecting (230) a first set of acceptable datasets from the plurality of datasets associated with the plurality of output parameters using one or more predefined quality criteria; and
d. determining (240) at least one of an upper specification limit and a lower specification limit for at least one output parameter from the selected first set of acceptable datasets.

2. The method (200) as claimed in as claim 1, wherein the upper specification limit and the lower specification limit are utilized for monitoring the quality of the industrial process (110) by comparing real time values associated with the at least one output parameter against the upper specification limit and the lower specification limit.

3. The method (200) as claimed in claim 1, wherein the method (200) further comprises calibrating the stimulation model (130) wherein calibrating the simulation model (130) comprises correcting a mean value associated with the simulation model (130) based on process data associated with the industrial process (110), the process data comprising time series data associated with the plurality of input and output parameters.

4. The method (200) as claimed in claim 1, wherein determining the at least one of an upper specification limit and lower specification limit comprises utilizing a statistical technique in relation to the first set of acceptable dataset.

5. The method (200) as claimed in claim 1, wherein the industrial process (110) is an additive manufacturing process and the one or more input parameters are associated with laser power output associated with a laser, powder characteristics, machine tuning, trajectory of the laser and the one or more output parameters are associated with workpiece geometry, melt pool size, manufacturing temperature.

6. The method (200) as claimed in claim 1, wherein the industrial process (110) is a subtractive machining process and the one or more input parameters are associated with dimensions of a blank material used in the industrial process (110), placement of the blank material in a machine associated with the industrial process (110), characteristics of the blank material, geometry of a cutting tool used in the machine and the one or more output parameters are associated with surface quality of a workpiece, geometry of the workpiece.

7. The method (200) as claimed in claim 1, wherein the industrial process (110) is a sheet metal forming process, and the one or more input parameters are associated with characteristics of the raw material, friction coefficients between a tool and the raw material, geometry of a mold, and the one or more output parameters are associated with stamping force generated by the tool, geometry of a work piece.

8. A device (300) for monitoring a quality associated with an industrial process (110), the device (300) comprising:
a. One or more processors (320) connected to a memory module (330), the one or more processors (320) configured to :
i. generate a plurality of datasets associated with the plurality of output parameters by simulating a simulation model of the industrial process using test data, wherein the test data includes a plurality of data sets associated with the input parameters, each data set from the plurality of data sets of the test data associated of a corresponding probability distribution of the input parameters and wherein the simulation model is for mapping a plurality of input parameters associated with the industrial process, to a plurality of output parameters associated with the industrial process;
ii. select a first set of acceptable datasets from the plurality of datasets associated with the plurality of output parameters using one or more predefined quality criteria; and
iii. determine at least one of an upper specification limit and a lower specification limit for at least one output parameter from the selected first set of acceptable datasets.

9. A non transitory storage medium (330) comprising a plurality of instructions, which when executed on one or more processors (320), cause the one or more processors (320) to:
a. generate a plurality of dataset associated with the plurality of output parameters by simulating a simulation model of the industrial process using test data, wherein the test data includes a second plurality of data sets associated with the input parameters, each data set from the second plurality of data sets associated of a corresponding probability distribution of the input parameters and wherein the simulation model is for mapping a plurality of input parameters associated with the industrial process, to a plurality of output parameters associated with the industrial process;
b. select a first set of acceptable datasets from the plurality of datasets associated with the plurality of output parameters using one or more predefined quality criteria; and
c. determine at least one of an upper specification limit and a lower specification limit for at least one output parameter from the selected first set of acceptable datasets.
